# DEMANDE DE BREVET EUROPEEN

(11) **EP 1 686 807 A1**
(43) Date de publication de la demande: **02.08.2006**
(21) Numéro de dépôt: 05290201.2
(22) Date de dépôt: 27.01.2005
(51) Int. Cl.: H04N 7/173, H04L 12/403

(54) **Méthode de répartition de la charge d'un centre de gestion transmettant des informations à un grand nombre d'unités d'utilisateur**

(71) Demandeur: Nagra France Sarl, 75015 Paris (FR)
(72) Inventeur: Nimour, Abdelkrim, 92320 Chatillon (FR)
(74) Mandataire: Nithardt, Joel

(57) **Abrégé**

La présente invention concerne une méthode de répartition de la charge d'un centre de gestion transmettant des informations à un grand nombre d'unités d'utilisateurs, chaque unité recevant les informations suite à une requête effectuée en se connectant au centre de gestion. Cette méthode est caractérisée par les étapes suivantes :
- détermination par le centre de gestion d'un nombre d'unités à traiter avec lesdites informations,
- détermination d'une durée pendant laquelle lesdites unités sont à traiter,
- transmission d'un message aux unités d'utilisateur comprenant d'une part la probabilité de connexion de ladite unité au centre de gestion basée sur le nombre d'unités précédemment déterminé et d'autre part la durée précédemment déterminée pendant laquelle ladite unité se connecte selon ladite probabilité.

## Description

### Domaine de l'invention

La présente invention concerne le domaine de la transmission d'informations numériques entre un centre de gestion et une pluralité d'unités d'utilisateurs connectées audit centre.

### Arrière plan technique

Une telle situation se présente par exemple dans le domaine de la télévision numérique à péage où un grand nombre de décodeurs d'abonnés sont connectés à un centre de gestion. Les informations transmises depuis le centre comprennent principalement des données de mise à jour des droits contenus dans le module de sécurité associé au décodeur. Ces droits achetés par l'utilisateur permettant la décryption de programmes audio/vidéo cryptés doivent être renouvelés fréquemment surtout lors de l'utilisation de la prestation de vidéo à la demande (Video On Demand, VOD). La mise à jour des droits implique une connexion en général de courte durée d'un décodeur au centre de gestion. Lorsque le nombre des décodeurs atteint plusieurs millions et lorsqu'ils tentent de se connecter dans un même intervalle de temps, par exemple à l'échéance d'abonnements, le centre de gestion devient rapidement surchargé.

Dans le domaine des réseaux sans fil par exemple une solution consiste à calculer un temps d'accès à chaque tentative de connexion afin que chaque unité puisse accéder au réseau dans une période donnée. Le document US6490645 décrit une méthode dans laquelle une pluralité d'utilisateurs partagent un accès à une ressource tel qu'un canal de communication. Chaque utilisateur bénéficie d'une priorité et d'une distribution de probabilité non-uniforme correspondant à cette priorité, la somme des distributions de probabilité étant uniforme. Lorsque qu'un utilisateur désire accéder à la ressource, il sélectionne un nombre aléatoire selon sa distribution de probabilité non-uniforme et calcule un temps d'accès basé sur ce nombre aléatoire.

Le document EP1346522 décrit une solution qui consiste à connecter un premier équipement cherchant à établir une connexion avec un second se trouvant dans un état de réception et à alterner les rôles d'émetteur et de récepteur de chaque équipement. Cette alternance est effectuée selon une distribution de probabilité jusqu'à l'expiration d'une période d'essai prédéterminée ou jusqu'à ce que la connexion soit établie entre les deux équipements. La longueur de la période pendant laquelle un équipement joue le rôle d'émetteur ou de récepteur est contrôlée par la distribution de probabilité.

Le document W02004100590 décrit un système de communication mobile qui détermine sur la base d'un nombre d'équipements mobiles l'établissement d'une communication soit du type point-multipoints, soit du type point à point pour la transmission de données multimédia. Certains équipements sont en état de veille tandis que d'autres maintiennent une connexion active contrôlée par le système. Ce dernier diffuse un message de contrôle comprenant un facteur de probabilité d'accès afin d'éviter de surcharger le système avec des réponses au message de contrôle. Les équipements connectés ignorent le message et ceux en état de veille répondent en fonction du facteur de probabilité d'accès. Le système compare le nombre de réponses reçues avec un seuil et détermine le type de connexion à établir, à savoir point-multipoints ou point à point. Le système peut en outre adapter le facteur de probabilité d'accès en fonction du nombre de réponses.

Les solutions décrites ci-dessus s'adaptent à des réseaux de communications où le nombre d'utilisateurs désirant accéder à un fournisseur de services est limité à quelques dizaines voire centaines. Par contre, lorsque ce nombre atteint le million, ces solutions ne permettent pas de résoudre de manière satisfaisante le problème de surcharge du centre de gestion ou du serveur central. De plus, certaines unités appartenant au réseau peuvent être hors service au moment où ils auraient dû se connecter pour leur mise à jour par exemple.

### Description de l'invention

Le but de la présente invention est de contrôler la charge des messages de requêtes transmis à un centre de gestion afin d'éviter sa surcharge ou du moins atténuer les pics de charge. Ces derniers se présentent lorsque le nombre d'unités cherchant à se connecter dans un même intervalle de temps devient important.

Ce but est atteint par une méthode de répartition de la charge d'un centre de gestion transmettant des informations à un grand nombre d'unités d'utilisateurs, chaque unité recevant les informations suite à une requête effectuée en se connectant au centre de gestion, caractérisée par les étapes suivantes:
- détermination par le centre de gestion d'un nombre d'unités à traiter avec lesdites informations,
- détermination d'une durée pendant laquelle lesdites unités sont à traiter,
- transmission d'un message aux unités d'utilisateur comprenant d'une part la probabilité de connexion de ladite unité au centre de gestion basée sur le nombre d'unités précédemment déterminé et d'autre part la durée précédemment déterminée pendant laquelle ladite unité se connecte selon ladite probabilité.

Le message est destiné à chaque unité du réseau contrôlé par le centre de gestion. A la réception du message, chaque unité génère un nombre aléatoire et le compare à la probabilité reçue. Si ce nombre est inférieur à la probabilité, l'unité a le droit de se connecter au centre de gestion. Elle génère ensuite un autre nombre aléatoire pour déterminer l'instant auquel elle se connecte, cet instant étant compris dans la durée incluse dans le message reçu. Lorsque ce nombre est supérieur à la probabilité, l'unité ne pourra pas se connecter et devra attendre un nouveau message à la suite duquel un nouveau nombre aléatoire sera généré permettant ou non une connexion. Le processus de transmission et de réception du message est répété à la fin de chaque durée déterminée afin de traiter toutes les unités du réseau pendant une période donnée. A chaque processus ou après un certain nombre de répétions du processus, la probabilité de connexion est augmentée du fait que les unités traitées précédemment et répertoriées par le centre de gestion ne sont plus comptées.

Comme les unités se connectent à des moments déterminés de manière aléatoire par le centre de gestion et non plus à des périodes fixes, les pics de charge sont supprimés, voire fortement atténués. La courbe de charge en fonction du temps devient ainsi plus uniforme.

Selon une variante, la probabilité de connexion peut être augmentée en fonction du nombre d'unités hors service. Le centre de gestion estime qu'un pourcentage constant d'unités ne se connectera pas dans une période donnée car elles sont soit déclenchées, soit défectueuses. Lors de la détermination du nombre d'unité à traiter, le centre de gestion tient compte de ce facteur pour augmenter la probabilité de connexion qu'il transmettra dans le message aux unités du réseau. Cette augmentation est calculée de manière à maintenir un nombre fixe d'unités qui se connectent pendant la durée définie.

Selon une autre variante, la probabilité peut aussi être adaptée en fonction de l'heure sachant que le nombre d'unités en service est plus grand le soir et la nuit que pendant la journée par exemple.

Dans l'application de la télévision numérique à péage, les unités en question sont des décodeurs d'abonnés qui se connectent périodiquement au centre de gestion de l'opérateur pour effectuer une mise à jour des droits de réception des programmes télévisés.

Par exemple, le nombre de décodeurs d'un réseau contrôlé par un centre de gestion se monte à 1 million. Le centre définit un nombre de décodeurs à traiter soit 1000 pendant une durée de une minute, ce taux dépendant de la capacité de traitement du serveur ou de sa charge admissible pendant une période donnée. La probabilité de connexion pendant une minute est donc de 1/1000. Le message transmis aux décodeurs contiendra donc cette probabilité de 1/1000 et la durée de une minute.

Selon une réalisation préférée, les données de probabilité et de durée sont incluses dans un message de contrôle ECM (Entitlement Control Message) qui est transmis régulièrement à tous les décodeurs et permettant la décryption des programmes diffusés.

A la réception du message ECM, le décodeur génère un nombre aléatoire compris entre 0 et 1, et si celui-ci est inférieur à la probabilité, le décodeur génère un autre nombre aléatoire définissant l'instant de connexion dans l'intervalle d'une minute ou le temps d'attente avant la connexion. Le centre de gestion transmet ce message toutes les minutes afin que tous les décodeurs actifs puissent se connecter. Ces connections sont comptabilisées par le centre de gestion afin d'accroître la probabilité de connexion en fonction du nombre de décodeurs mis à jour. Sur 1 million de décodeurs, la probabilité peut évoluer de 1/1000, par exemple vers 1/900, 1/800, 1/700, etc. Si l'on tient compte d'un taux de décodeurs actifs de 80%, la probabilité initiale peut être augmentée à 1/800.

Lorsque le nombre de décodeurs actifs augmente pendant la nuit par exemple, la probabilité initiale sera fixée à une valeur inférieure par exemple 1/2000, afin d'éviter un nombre excessif de connexions pendant une période donnée, 1 minute, entraînant une surcharge du serveur.

Selon une variante le centre de gestion n'évalue pas le nombre de décodeurs actifs capable de recevoir des messages. Il transmet dans une première étape des messages avec une faible probabilité de connexion correspondant à une capacité de traitement inférieure à la capacité nominale du serveur. Puis lors des étapes ultérieures, cette probabilité est augmentée en fonction des connections effectuées avec succès de manière à atteindre la capacité effective du serveur ou une charge prédéfinie de ce dernier.

Selon une autre variante la probabilité de connexion peut être régulée en fonction du nombre de décodeurs actifs et de la capacité du serveur avec une boucle de rétro - action. Lorsque le nombre de connexions devient trop important ou dépasse un seuil donné, un message d'alerte est envoyé par le serveur du centre de gestion au générateur des messages de contrôle ECM afin de réduire la probabilité de connexion. Dans le cas contraire, lorsque le nombre de connexion diminue ou est inférieur à une valeur donnée, un autre message d'alerte entraîne une augmentation de cette probabilité transmise par les messages ECM.

D'une manière générale, il est à noter que la probabilité de connexion est adaptée de manière à maintenir la valeur du taux de charge de traitement du serveur selon une valeur définie par le serveur quel que soit le nombre de décodeurs actifs connectés au réseau.

## Revendications

1. Méthode de répartition de la charge d'un centre de gestion transmettant des informations à un grand nombre d'unités d'utilisateurs, chaque unité recevant les informations suite à une requête effectuée en se connectant au centre de gestion, **caractérisée par** les étapes suivantes:
- détermination par le centre de gestion d'un nombre d'unités à traiter avec lesdites informations,
- détermination d'une durée pendant laquelle lesdites unités sont à traiter,
- transmission d'un message aux unités d'utilisateur comprenant d'une part la probabilité de connexion de ladite unité au centre de gestion basée sur le nombre d'unités précédemment déterminé et d'autre part la durée précédemment déterminée pendant laquelle ladite unité se connecte selon ladite probabilité.

2. Méthode selon la revendication 1 **caractérisée en ce que** chaque unité recevant le message génère un nombre aléatoire et le compare avec la probabilité de connexion, lorsque ledit nombre est inférieur à la probabilité, l'unité génère un autre nombre aléatoire définissant l'instant auquel elle se connecte au centre de gestion, ledit instant étant compris dans la durée incluse dans le message reçu.

3. Méthode selon les revendications 1 et 2 **caractérisée en ce que** le processus de transmission du message et de sa réception par une unité est répété selon une période définie par la durée déterminée jusqu'à ce que l'ensemble des unités ait été connecté au centre de gestion.

4. Méthode selon la revendication 1 **caractérisée en ce que** la probabilité de connexion est augmentée en fonction du nombre d'unités ayant été connectées avec succès, le centre de gestion répertoriant les connexions effectuées.

5. Méthode selon la revendication 1 **caractérisée en ce que** le nombre d'unités à traiter pendant la durée déterminée dépend de la capacité de traitement du serveur ou de sa charge admissible pendant une période donnée.

6. Méthode selon la revendication 1 **caractérisée en ce que** la probabilité de connexion est déterminée en fonction du nombre d'unités actives capables de se connecter au centre de gestion, les unités restantes étant hors service.

7. Méthode selon la revendication 6 **caractérisée en ce que** la probabilité de connexion est augmentée lorsque le nombre d'unités hors service augmente en fonction de la période de connexion des unités choisie.

8. Méthode selon la revendication 5 **caractérisée en ce que** la probabilité de connexion est déterminée dans une première étape selon une capacité de traitement inférieure à la capacité nominale du serveur et augmentée en fonction des connections effectuées avec succès de manière à atteindre la capacité effective du serveur ou une charge prédéfinie dudit serveur.

9. Méthode selon la revendication 1 **caractérisée en ce que** la probabilité de connexion est régulée en fonction du nombre d'unités actives et de la capacité du serveur.

10. Méthode selon la revendication 9 **caractérisée en ce que** lorsque le nombre de connexions dépasse un seuil donné, un message d'alerte est envoyé par le serveur du centre de gestion à un générateur de messages entraînant la réduction de la probabilité de connexion.

11. Méthode selon la revendication 9 **caractérisée en ce que** lorsque le nombre de connexions, est inférieur à une valeur donnée un message d'alerte est envoyé par le serveur du centre de gestion à un générateur de messages entraînant l'accroissement de la probabilité de connexion.

12. Méthode selon la revendication 1 **caractérisée en ce que** les unités consistent en des décodeurs de télévision à péage connectés à un centre de gestion, lesdits décodeurs transmettant des requêtes de mise à jour des droits d'accès à des programmes diffusés à un serveur du centre de gestion, ledit serveur transmettant un message de contrôle ECM aux décodeurs comprenant une probabilité de connexion et une durée pendant laquelle un décodeur se connecte, pour effectuer sa mise à jour, selon la probabilité reçue.
